# EUROPEAN PATENT APPLICATION

(11) **EP 4 636 873 A1**
(43) Date of publication of application: **22.10.2025**
(21) Application number: 23901759.3
(22) Date of filing: 07.09.2023
(51) Int. Cl.: H01M 8/04313, H01M 8/04537, H01M 8/04664, H01M 8/04955, H02J 3/38

(54) **ANALYSIS METHOD, ANALYSIS DEVICE, AND POWER GENERATION SYSTEM**

(30) Priority: 15.12.2022 JP 2022199946
(71) Applicant: Panasonic Intellectual Property Management Co., Ltd., Kadoma-shi, Osaka 571-0057 (JP)
(72) Inventor: ISE, Takehiko, Kadoma-shi, Osaka 571-0057 (JP); KANEKO, Yasushi, Kadoma-shi, Osaka 571-0057 (JP); TANAKA, Yoshikazu, Kadoma-shi, Osaka 571-0057 (JP); YOSHIHARA, Yasumichi, Kadoma-shi, Osaka 571-0057 (JP); TAGUCHI, Yoshifumi, Kadoma-shi, Osaka 571-0057 (JP)
(74) Representative: Grünecker Patent- und Rechtsanwälte PartG mbB
(86) International application number: PCT/JP2023/032600
(87) International publication number: WO 2024/127744

(57) **Abstract**

An analysis method according to the present disclosure includes a step for receiving an output voltage of an inverter that converts direct-current power of a fuel cell device to alternating-current power, a step for receiving information indicating an abnormality in the fuel cell device when an abnormality occurs in the fuel cell device, and a step for analyzing, when power supply from the fuel cell device to a power load via the inverter is stopped abnormally, a cause of the abnormal stoppage on a basis of the output voltage and presence or absence of information indicating an abnormality in the fuel cell device.

## Description

### Technical Field

The present disclosure relates to an analysis method, an analysis device, and a power generation system.

### Background Art

In PTL 1, for a distributed power generation device, such as a fuel cell system that can be interconnected to a system power source, a countermeasure is proposed for a case where the output of an inverter circuit, which converts DC voltage to AC voltage, of the power generation device enters an overvoltage state. Specifically, in PTL 1, in a case where the output voltage (absolute value) detected by a voltage detector is in an overvoltage state that exceeds a reference voltage, the inverter circuit is controlled to reduce the output voltage.

### Citation List

### Patent Literature

PTL 1: Japanese Unexamined Patent Application Publication No. 2007-325333

### Summary of Invention

### Technical Problem

A purpose of the present disclosure is to provide, as an example, an analysis method, an analysis device, and a power generation system that can more appropriately analyze the cause of abnormal stoppage of the power supply from a fuel cell device to a power load via an inverter than before.

### Solution to Problem

In order to solve the above problem, an analysis method according to an aspect of the present disclosure includes a step for receiving an output voltage of an inverter that converts direct-current power of a fuel cell device to alternating-current power, a step for receiving information indicating an abnormality in the fuel cell device when an abnormality occurs in the fuel cell device, and a step for analyzing, when power supply from the fuel cell device to a power load via the inverter is stopped abnormally, a cause of the abnormal stoppage on a basis of the output voltage and presence or absence of information indicating an abnormality in the fuel cell device.

An analysis device according to an aspect of the present disclosure includes a communication device that receives an output voltage of an inverter, which converts direct-current power of a fuel cell device to alternating-current power, and information indicating an abnormality in the fuel cell device when an abnormality occurs in the fuel cell device, and a control device that analyzes, when power supply from the fuel cell device to a power load via the inverter is stopped abnormally, a cause of the abnormal stoppage on a basis of the output voltage and presence or absence of information indicating an abnormality in the fuel cell device.

A power generation system according to an aspect of the present disclosure includes a fuel cell device and the analysis device described above.

### Advantageous Effects of Invention

An analysis method, an analysis device, and a power generation system according to an aspect of the present disclosure provide the effect of making it possible to more appropriately analyze the cause of abnormal stoppage of power supply from a fuel cell device to a power load via an inverter than before.

### Brief Description of Drawings

[Fig. 1] Fig. 1 is a diagram illustrating an example of a power generation system according to a first embodiment.
[Fig. 2] Fig. 2 is a diagram illustrating an example of an analysis device in Fig. 1.
[Fig. 3] Fig. 3 is a flowchart illustrating an example of the operation of an analysis device (analysis method) in the power generation system according to the first embodiment.
[Fig. 4] Fig. 4 is a flowchart illustrating an example of the operation of the analysis device (analysis method) in the power generation system according to an Example of the first embodiment.
[Fig. 5] Fig. 5 is a diagram illustrating an example of a power generation system according to a second embodiment.

### Description of Embodiments

In the distributed power generation device in PTL 1, the control of the inverter circuit is considered for cases where the absolute value of the output voltage detected by the voltage detector is in the overvoltage state that exceeds the reference voltage. However, the analysis of the cause of abnormal stoppage of the power supply to the power load is not specifically considered.

Thus, an analysis method according to a first aspect of the present disclosure includes a step for receiving an output voltage of an inverter that converts direct-current power of a fuel cell device to alternating-current power, a step for receiving information indicating an abnormality in the fuel cell device when an abnormality occurs in the fuel cell device, and a step for analyzing, when power supply from the fuel cell device to a power load via the inverter is stopped abnormally, a cause of the abnormal stoppage on a basis of the output voltage and presence or absence of information indicating an abnormality in the fuel cell device.

According to the description above, the analysis method according to the present aspect can more appropriately analyze the cause of abnormal stoppage of the power supply from the fuel cell device to the power load via the inverter than before.

Specifically, by receiving the output voltage of the inverter and information indicating an abnormality in the fuel cell device, the analysis method according to the present aspect makes it easier to identify which device in the power supply system has an abnormality that is the cause of the above abnormal stoppage than in a case where these data are not received.

In an analysis method according to a second aspect of the present disclosure based on the analysis method according to the first aspect, the cause of the abnormal stoppage may be determined to be an abnormality in a power system when the output voltage of the inverter is greater than a set value for the inverter, the cause of the abnormal stoppage may be determined to be an abnormality in the fuel cell device when the output voltage of the inverter is less than or equal to the set value for the inverter and the fuel cell device is abnormal, and the cause of the abnormal stoppage may be determined to be an abnormality in the inverter when the output voltage of the inverter is less than or equal to the set value for the inverter and the fuel cell device is normal.

According to the above description, the analysis method according to the present aspect can appropriately identify, on the basis of the magnitude relationship between the output voltage of the inverter and the set value for the inverter and the presence or absence of information indicating an abnormality in the fuel cell device, which of the power system, the fuel cell device, and the inverter has an abnormality that is the cause of the abnormal stoppage of the power supply from the fuel cell device to the power load via the inverter.

An analysis device according to a third aspect of the present disclosure includes a communication device that receives an output voltage of an inverter, which converts direct-current power of a fuel cell device to alternating-current power, and information indicating an abnormality in the fuel cell device when an abnormality occurs in the fuel cell device, and a control device that analyzes, when power supply from the fuel cell device to a power load via the inverter is stopped abnormally, a cause of the abnormal stoppage on a basis of the output voltage of the inverter and presence or absence of information indicating an abnormality in the fuel cell device.

With such a configuration, the analysis device according to the present aspect can more appropriately analyze the cause of abnormal stoppage of the power supply from the fuel cell device to the power load via the inverter than before. Note that the details of the operational effects of the analysis device according to the present aspect are substantially the same as those of the analysis method according to the first aspect, and thus the description will be omitted.

A power generation system according to a fourth aspect of the present disclosure includes a fuel cell device and the analysis device according to the third aspect.

With such a configuration, the power generation system according to the present aspect can more appropriately analyze the cause of abnormal stoppage of the power supply from the fuel cell device to the power load via the inverter than before. Note that the details of the operational effects of the power generation system according to the present aspect are substantially the same as those of the analysis method according to the first aspect, and thus the description will be omitted.

In the following, specific examples of the above aspects of the present disclosure will be described with reference to the attached drawings. Each of the specific examples described below is an example of the above aspects of the present disclosure. Therefore, the shapes, numerical values, constituent elements, and locations and connection forms of the constituent elements illustrated below do not limit the scope of the claims as long as such description is not made in the claims.

In addition, constituent elements described below that are not described in the independent claims that represent the highest level concept of the present disclosure are described as optional constituent elements. Moreover, the description of items with the same symbols in the drawings may be omitted. The drawings are schematic representations of the individual constituent elements for ease of understanding, and thus there may be a case where representations are not exact in terms of shape and dimensional ratio.

Furthermore, in device operations, the order of the processes may be rearranged as necessary, or known processes may be added.

### (First Embodiment)

### [Device Configuration]

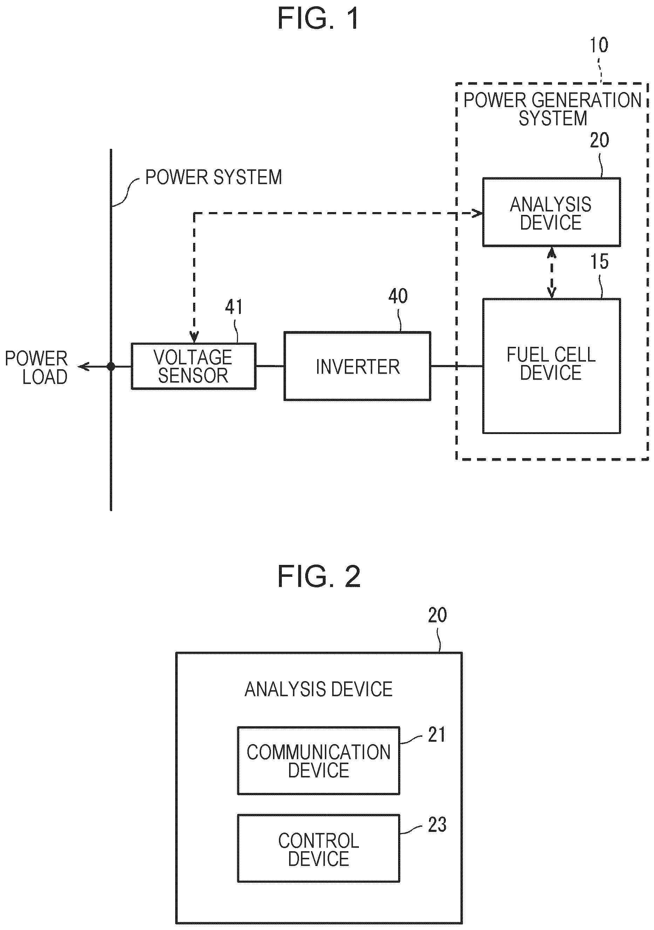

Fig. 1 is a diagram illustrating an example of a power generation system according to a first embodiment. Fig. 2 is a diagram illustrating an example of an analysis device in Fig. 1.

A power generation system 10 according to the present embodiment includes a fuel cell device 15 and an analysis device 20, as illustrated in Fig. 1.

The fuel cell device 15 includes a power generation unit that generates electric power using hydrogen-containing gas and oxygen-containing gas. The fuel cell device 15 may include a single power generation unit or multiple power generation units.

Here, in the latter case, the power generation system 10 may be, for example, a system that supplies a large amount of power to a power system. That is, in the latter case, the fuel cell device 15 includes a power generation unit group formed by multiple power generation units including fuel cell stacks, and the fuel cell device 15 corresponds to each of the groups obtained by dividing the power generation unit group. The detailed configuration of the power generation system 10 will be described in a second embodiment.

As illustrated in Fig. 2, the analysis device 20 includes a communication device 21 and a control device 23.

The communication device 21 is a receiver that receives the output voltage of an inverter 40 and information indicating an abnormality in the fuel cell device 15 in a case where an abnormality has occurred in the fuel cell device 15. For example, the communication device 21 may receive the above output voltage measured by a voltage sensor 41 and the above information transmitted from the fuel cell device 15 at predetermined time intervals via a communication network.

The inverter 40 is a device that converts the direct-current (DC) power of the fuel cell device 15 to alternating-current (AC) power and is also called a power conditioner. The AC power output from the inverter 40 is supplied to an appropriate power load, as illustrated in Fig. 1. For example, the "power load" can be factory equipment or household appliances. The former factory equipment is generally supplied with three-phase 200 V AC power. The latter household appliances are generally supplied with single-phase 100 V AC power. The power load is also connected to a power system so that the power load can receive commercial power from the power system in addition to power from the fuel cell device 15, as illustrated in Fig. 1. Each power generation unit may also include a direct current to direct current converter (DC-DC converter), which is not illustrated.

When the power supply from the fuel cell device 15 to the power load via the inverter 40 is stopped abnormally, the control device 23 analyzes the cause of the above abnormal stoppage on the basis of the output voltage of the inverter 40 and the presence or absence of information indicating an abnormality in the fuel cell device 15.

In this case, "information indicating an abnormality in the fuel cell device 15" may be, for example, information indicating that the fuel cell device 15 is abnormal. Such information may be reported to an appropriate external device of the power generation system 10 in a timely manner. Examples of the "external device" may include, but are not limited to, information terminals of consumers who receive the service of supplying electricity generated by the power generation system 10 and display devices of maintenance companies.

It is sufficient that the control device 23 have a control function. The control device 23 includes an arithmetic processor (not illustrated) and a memory unit that stores a control program. The arithmetic processor reads out and executes the control program stored in the memory unit, so that the control device 23 performs predetermined control. For example, the arithmetic processor is a microprocessor. For example, the memory unit is a memory. Note that the control device 23 may directly control operation including the output of each power generation unit within the fuel cell device 15. In a case where the power generation unit includes a control apparatus, which is not illustrated and controls the operation of the power generation unit including outputting, the control device 23 may indirectly control, through this control apparatus, the operation including outputting from the power generation unit in the fuel cell device 15.

Note that the above configuration of the power generation system 10 is an example and is not limited to this example. For example, in the example illustrated in Fig. 1, the inverter 40 and the voltage sensor 41 are provided outside the power generation system 10, but the inverter 40 and the voltage sensor 41 may be provided inside the power generation system 10. Moreover, the voltage sensor 41 may be built in the inverter 40.

### [Operation]

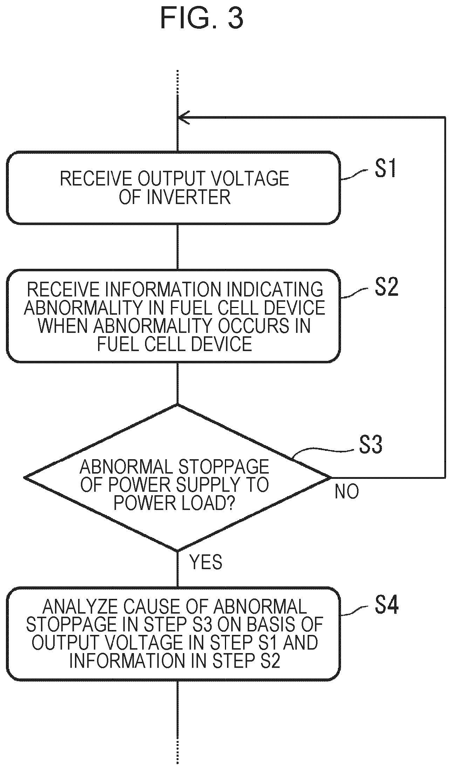

Fig. 3 is a flowchart illustrating an example of the operation of an analysis device (analysis method) in the power generation system according to the first embodiment. The following operation may be performed, for example, by the arithmetic processor of the control device 23 reading the control program from the memory unit of the control device 23. However, it is not necessarily required that the following operation be performed by the control device 23. The operator may perform part of the operation. The following example describes a case in which the operation is controlled by the control device 23.

First, in Step S1, the output voltage of the inverter 40, which converts the DC power of the fuel cell device 15 to AC power, is received in a timely manner during the power generation of the power generation system 10.

Next, in Step S2, information indicating the operating state of the fuel cell device 15 is received. Here, in a case where an abnormality occurs in the fuel cell device 15, information indicating an abnormality in the fuel cell device 15 is received. When information indicating an abnormality in the fuel cell device 15 is received, this information is stored in a memory unit, which is not illustrated, of the analysis device 20. In this case, the information indicating the operating state of the fuel cell device 15 includes not only information indicating the abnormality in the fuel cell device 15 but also information indicating any other operating state. For example, such information may be information indicating that the fuel cell device 15 is in one of the following operating states: start up, power generation, and stoppage. Moreover, such information may be the output voltage of the fuel cell device 15 and information indicating the output of the fuel cell device 15, such as the output voltage. Note that in a case where the fuel cell device 15 includes multiple power generation units, information indicating an operating state is received for each power generation unit.

Next, when the power supply from the fuel cell device 15 to the power load via the inverter 40 stops abnormally (when "YES" in Step S3), the cause of the abnormal stoppage in Step S3 is analyzed in Step S4 on the basis of the output voltage in Step S1 and the information in Step S2. Note that an example of the specific process for performing Step S4 will be described in an Example. Note that the abnormal stoppage of the power supply from the fuel cell device 15 to the power load is detected when the output from the inverter 40 stops. Specifically, for example, when the value obtained by multiplying the output voltage and output current of the inverter 40 reaches 0 in the analysis device 20, the analysis device 20 determines that the power supply from the fuel cell device 15 to the power load has stopped abnormally. When the output current of the inverter 40 reaches 0, the analysis device 20 may determine that the power supply from the fuel cell device 15 to the power load has stopped abnormally. The output current of the inverter 40 is detected by a current sensor, which is not illustrated, installed between the inverter 40 and the power load or built in the inverter 40.

The information regarding the analysis of the cause of this abnormal stoppage may be reported to an appropriate external device of the power generation system 10. Examples of the "external device" may include, but are not limited to, information terminals of consumers who receive the service of supplying electricity generated by the power generation system 10 and display devices of maintenance companies.

In Step S3, in a case where there is no abnormal stoppage described above ("No" in Step S3), the operation in and after Step S1 is performed again in a timely manner.

The above operation of the analysis device 20 is an example and is not limited to this example. For example, the timing of the operation of Step S1 and the timing of the operation of Step S2 may be simultaneous or in reverse order.

According to the present embodiment described above, it is possible to more appropriately analyze the cause of abnormal stoppage of the power supply from the fuel cell device 15 to the power load via the inverter 40 than before.

Specifically, by receiving the output voltage of the inverter 40 and information indicating an abnormality in the fuel cell device 15, it is easier to identify which device in the power supply system has an abnormality that is the cause of the above abnormal stoppage than in a case where these data are not received.

### (Example)

An analysis method of an Example of the first embodiment is substantially the same as that of the first embodiment, except for the operations described below.

In the analysis method according to this Example, when the power supply from the fuel cell device 15 to the power load via the inverter 40 is stopped abnormally, the cause of the above abnormal stoppage is determined to be an abnormality in the power system in a case where the output voltage of the inverter 40 is greater than the set value for the inverter 40. This is due to the following reasons.

First, in order to supply power from the inverter 40 to the power load, the output voltage of the inverter 40 needs to be greater than the voltage of the system power supplied to the power load. Thus, the output voltage of the inverter 40 increases as the voltage of the system power increases. Note that the voltage of the system power supplied to the power load is a voltage reduced through a transformer installed between the power system and the power load.

In this case, an increase in the voltage of the power system occurs due to various factors, such as a temporary drop in the power demand of the power load interconnected to the power system, reverse power flow from a distributed power generation device connected to the power system, and so forth. In the inverter 40, the output voltage of the inverter 40 is monitored by the control device 23, which functions to stop the inverter 40 from outputting power when it is detected that the output voltage exceeds a set value that is set in advance. Thus, in a case where the output voltage of the inverter 40 is greater than the set value for the inverter 40 when the power supply from the fuel cell device 15 to the power load via the inverter 40 is stopped abnormally, the cause of the above abnormal stoppage is determined to be the abnormally high voltage of the system power.

Moreover, in a case where the output voltage of the inverter 40 is less than or equal to the set value for the inverter 40, and the fuel cell device 15 is abnormal when the power supply from the fuel cell device 15 to the power load via the inverter 40 is stopped abnormally, the cause of the above abnormal stoppage is determined to be an abnormality in the fuel cell device 15. Note that "the fuel cell device 15 is abnormal" means that the analysis device 20 has received information indicating an abnormality in the fuel cell device 15 via the communication device 21. Examples of "the fuel cell device 15 is abnormal" can include, but are not limited to, hydrogen leakage from the fuel cell device 15, stoppage of hydrogen fuel supply to the fuel cell device 15, and an increase in the temperature of the fuel cell device 15. In a case where the fuel cell device 15 is formed to include multiple power generation units, the cause of the above abnormal stoppage is determined to be an abnormality in the fuel cell device 15 in a case where all of the power generation units of the fuel cell device 15 that are generating power become abnormal and have stopped. This is because even when some of the power generation units of the fuel cell device 15 that are generating power become abnormal and stop and the output power of the inverter 40 decreases, the output power of the inverter 40 will continue.

Moreover, in a case where the output voltage of the inverter 40 is less than or equal to the set value for the inverter 40, and the fuel cell device 15 is normal when the power supply from the fuel cell device 15 to the power load via the inverter 40 is stopped abnormally, the cause of the above abnormal stoppage is determined to be an abnormality in the inverter 40. Note that an example of "an abnormality in the inverter 40" can be, but is not limited to, an increase in the temperature of the inverter 40.

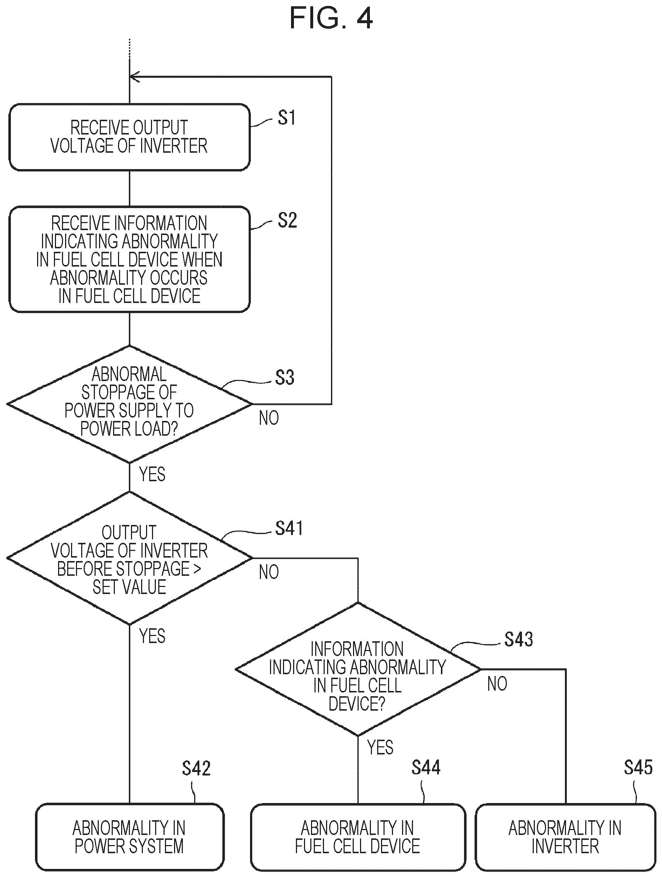

Fig. 4 is a flowchart illustrating an example of the operation of the analysis device (analysis method) in the power generation system according to the Example of the first embodiment. The following operation may be performed, for example, by the arithmetic processor of the control device 23 reading the control program from the memory unit of the control device 23. However, it is not necessarily required that the following operation be performed by the control device 23. The operator may perform part of the operation. The following example describes a case in which the operation is controlled by the control device 23.

Steps S1, S2, and S3 in Fig. 4 are substantially the same as Steps S1, S2, and S3 in Fig. 3, respectively, and thus the description of these steps will be omitted.

In step S41, it is determined whether or not the output voltage of the inverter 40 before the abnormal stoppage of the power supply from the fuel cell device 15 to the power load via the inverter 40 is greater than a set value for the inverter 40.

In a case where the output voltage of the inverter 40 is greater than the set value for the inverter 40 (when "YES" in Step S41), then in Step S42, the abnormal stoppage in Step S3 is analyzed as being caused by an abnormality in the power system. Note that the information regarding the analysis of the cause of this abnormal stoppage may be reported to an appropriate external device of the power generation system 10.

In a case where the output voltage of the inverter 40 is less than or equal to the set value for the inverter 40 (when "NO" in Step S41), the process proceeds to the next determination step, Step S43, where it is determined whether or not information indicating an abnormality in the fuel cell device 15 is present in the memory unit (not illustrated) of the analysis device 20.

In a case where information indicating an abnormality in the fuel cell device 15 is present in the memory unit of the analysis device 20 (when "YES" in Step S43), then in step S44, the abnormal stoppage in Step S3 is analyzed as being caused by the abnormality in the fuel cell device 15. Note that the information regarding the analysis of the cause of this abnormal stoppage may be reported to an appropriate external device of the power generation system 10.

In a case where information indicating an abnormality in the fuel cell device 15 is absent in the memory unit of the analysis device 20 (when "NO" in Step S43), then in step S45, the abnormal stoppage in Step S3 is analyzed as being caused by an abnormality in the inverter 40. Note that the information regarding the analysis of the cause of this abnormal stoppage may be reported to an appropriate external device of the power generation system 10.

According to this Example described above, on the basis of the magnitude relationship between the output voltage of the inverter 40 and the set value for the inverter 40 and the presence or absence of information indicating an abnormality in the fuel cell device 15, it is possible to properly identify which of the power system, the fuel cell device 15, and the inverter 40 has an abnormality that is the cause of the abnormal stoppage of the power supply from the fuel cell device 15 to the power load via the inverter 40. Note that when the output of the inverter 40 is stopped due to an abnormality in the power system or in the inverter 40, this may trigger an abnormality in the fuel cell device 15, which may also cause the fuel cell device 15 to stop. That is, information indicating an abnormality in the fuel cell device 15 may have been received even though the cause of the above abnormal stoppage is an abnormality in the power system or in the inverter 40. In this case, the timing at which the output voltage of the inverter 40 has exceeded the set value or the output power of the inverter 40 has become zero is earlier than the timing at which an abnormality has occurred in the fuel cell device 15, and thus the cause of the above abnormal stoppage can be determined by this timing difference. Note that in a case where the analysis device 20 performs a cause analysis for the abnormal stoppage before an abnormality occurs in the fuel cell device 15, the determination of the cause of the abnormal stoppage using this timing difference is not necessary.

The analysis method, the analysis device 20, and the power generation system 10 according to this Example may be substantially the same as those of the first embodiment, except for the features described above.

### (Second Embodiment)

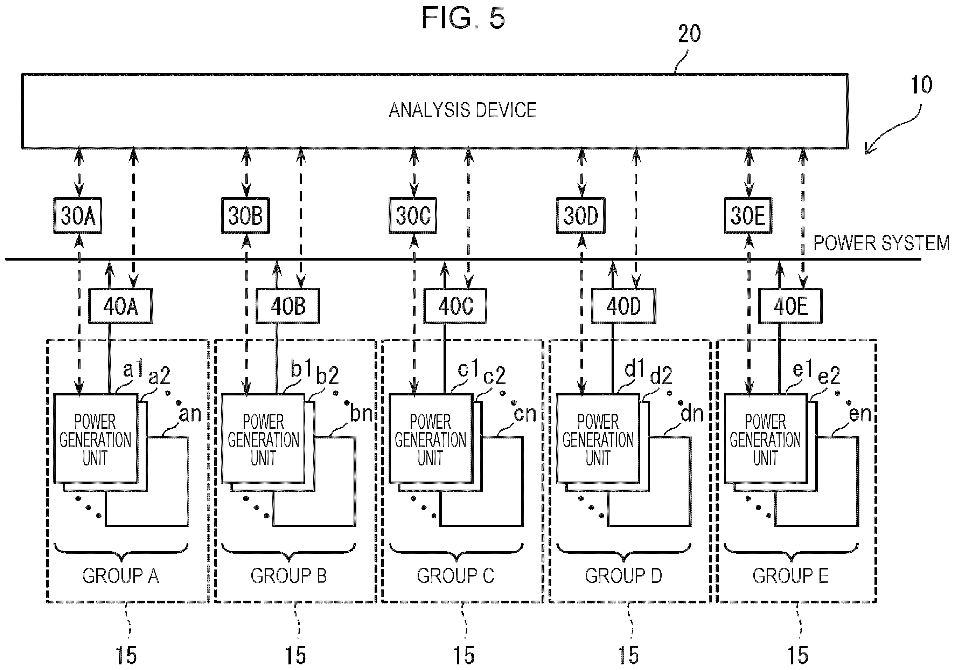

Fig. 5 is a diagram illustrating an example of a power generation system according to a second embodiment. Note that, for the purpose of simplifying the drawing, the illustrations of the inverter 40 and the voltage sensor 41 in the first embodiment (Fig. 1) are omitted in Fig. 5.

As illustrated in Fig. 5, a power generation system 10 according to the present embodiment includes fuel cell devices 15, the analysis device 20, control apparatuses 30A to 30E, and inverters 40A to 40E. In this case, the configuration inside the analysis device 20 is substantially the same as that of the first embodiment, and thus a detailed description will be omitted.

In the example illustrated in Fig. 5, the power generation system 10 has a power generation unit group formed by multiple power generation units including fuel cell stacks. This power generation unit group has groups formed in units of multiple power generation units.

In this example, the power generation unit group is grouped into power generation units a1 to an belonging to Group A, power generation units b1 to bn belonging to Group B, power generation units c1 to cn belonging to Group C, power generation units d1 to dn belonging to Group D, and power generation units e1 to en belonging to Group E. For each group, all the power generation units belonging to the group are also referred to simply as "intra-group power generation units". The fuel cell devices according to the present disclosure are, for example, the respective Groups A to E.

Note that the configuration of the above power generation unit group is an example and is not limited to this example. For example, the power generation unit group may have groups formed using a single power generation unit croup. Moreover, the number of power generation units in the group may be one.

The control apparatuses 30A to 30E are provided for the power generation units a1 to an of Group A, the power generation units b1 to bn of Group B, the power generation units c1 to cn of Group C, the power generation units d1 to dn of Group D, and the power generation units e1 to en of Group E, respectively. The control apparatuses 30A to 30E each control the operations of the individual power generation units in their corresponding groups.

For example, the control apparatus 30A controls the output of each of these power generation units a1 to an via the communication network so that the power generation units a1 to an belonging to Group A can operate efficiently (for example, lifetime optimization).

It is sufficient that the control apparatuses 30A to 30E have control functions. The control apparatuses 30A to 30E each include an arithmetic processor (not illustrated), a memory unit that stores a control program, and a communication device. The arithmetic processors read out and execute the control programs stored in the memory units, thereby performing predetermined control in the control apparatuses 30A to 30E. For example, the arithmetic processors are microprocessors. For example, the memory units are memories.

The inverters 40A to 40E are provided for the power generation units a1 to an of Group A, the power generation units b1 to bn of Group B, the power generation units c1 to cn of Group C, the power generation units d1 to dn of Group D, and the power generation units e1 to en of Group E, respectively. The detailed configurations of the inverters 40A to 40E are substantially the same as that of the inverter 40 according to the first embodiment, and thus the description will be omitted. Note that, in this example, each of the inverters 40A to 40E includes a voltage sensor and a current sensor.

When the power supply from the fuel cell device 15 to the power load via the inverter is stopped abnormally as described above, the control device 23 of the analysis device 20 (see Fig. 2) analyzes the cause of the abnormal stoppage on the basis of the output voltage of the inverter and the presence or absence of information indicating an abnormality in the fuel cell devices 15. Note that the analysis device 20 receives the output voltages of the inverters 40A to 40E detected by the voltage sensors built in the inverters 40A to 40E. The analysis device 20 also receives the output currents of the inverters 40A to 40E detected by the current sensors built in the inverters 40A to 40E. In this case, the abnormal stoppage of the power supply from the fuel cell devices 15 to the power load is detected using the above output currents substantially in the same way as in the first embodiment. When abnormalities occur in the power generation units belonging to Groups A to E, the analysis device 20 receives information indicating abnormalities in the power generation units via the control apparatuses 30A to 30E.

The operational effects of the power generation system 10 according to the present embodiment are substantially the same as those described in the first embodiment or the Example of the first embodiment, and thus the description will be omitted.

The above configuration of the power generation system 10 is an example and is not limited to this example. For example, the analysis device 20 may have the control function of the control apparatuses 30A to 30E and directly control the operation of each of the power generation units in the groups.

The first embodiment, the Example of the first embodiment, and the second embodiment may be combined with each other as long as they do not exclude each other. From the above description, many improvements and other embodiments of the present disclosure will be apparent to those skilled in the art. Accordingly, the above description is to be construed as examples only and is provided for the purpose of instructing those skilled in the art on the best manner in which the present disclosure is performed. Details of the structure and/or functions of the present disclosure can be practically changed without departing from the spirit of the present disclosure.

### Industrial Applicability

An aspect of the present disclosure can be used for an analysis method, an analysis device, and a power generation system that can more appropriately analyze the cause of abnormal stoppage of the power supply from a fuel cell device to a power load via an inverter than before.

### Reference Signs List

10: power generation system
15: fuel cell device
20: analysis device
21: communication device
23: control device
30A: control apparatus
30B: control apparatus
30C: control apparatus
30D: control apparatus
30E: control apparatus
40: inverter
40A: inverter
40B: inverter
40C: inverter
40D: inverter
40E: inverter
41: voltage sensor
a1 to an: power generation unit
b1 to bn: power generation unit
c1 to cn: power generation unit
d1 to dn: power generation unit
e1 to en: power generation unit

## Claims

1. An analysis method comprising:
a step for receiving an output voltage of an inverter that converts direct-current power of a fuel cell device to alternating-current power;
a step for receiving information indicating an abnormality in the fuel cell device when an abnormality occurs in the fuel cell device; and
a step for analyzing, when power supply from the fuel cell device to a power load via the inverter is stopped abnormally, a cause of the abnormal stoppage on a basis of the output voltage and presence or absence of information indicating an abnormality in the fuel cell device.

2. An analysis method in which the cause of the abnormal stoppage is determined to be an abnormality in a power system when the output voltage is greater than a set value for the inverter,
the cause of the abnormal stoppage is determined to be an abnormality in the fuel cell device when the output voltage is less than or equal to the set value for the inverter and the fuel cell device is abnormal, and
the cause of the abnormal stoppage is determined to be an abnormality in the inverter when the output voltage is less than or equal to the set value for the inverter and the fuel cell device is normal.

3. An analysis device comprising:
a communication device that receives an output voltage of an inverter, which converts direct-current power of a fuel cell device to alternating-current power, and information indicating an abnormality in the fuel cell device when an abnormality occurs in the fuel cell device; and
a control device that analyzes, when power supply from the fuel cell device to a power load via the inverter is stopped abnormally, a cause of the abnormal stoppage on a basis of the output voltage and presence or absence of information indicating an abnormality in the fuel cell device.

4. A power generation system comprising:
a fuel cell device; and
the analysis device according to claim 3.
